Europäisches Patentamt

European Patent Office

Office européen des brevets

(19)

(11) **EP 1 384 558 A1**

(12) **EUROPEAN PATENT APPLICATION**
published in accordance with Art. 158(3) EPC

(43) Date of publication:
**28.01.2004 Bulletin 2004/05**

(51) Int Cl.⁷: **B27N 3/00, E04F 13/14**

(21) Application number: **02722924.4**

(86) International application number:
**PCT/JP2002/004366**

(22) Date of filing: **01.05.2002**

(87) International publication number:
**WO 2002/090070 (14.11.2002 Gazette 2002/46)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **02.05.2001 JP 2001135151**
**08.08.2001 JP 2001241231**

(71) Applicant: **Sanei Kensetsu Kabushiki Kaisha Tsuru-shi, Yamanashi 402-0025 (JP)**

(72) Inventors:
• **OIKAWA, Kikuo**
**Niigata-shi, Niigata 950-2074 (JP)**

• **KOMATSU, Toru,**
**c/o Sanei Kensetsu Kabushiki Kaisha**
**Tsuru-shi, Yamanashi 402-0025 (JP)**
• **NISHIMAKI, Ryusuke,**
**c/o Sanei Kensetsu Kabushiki**
**Tsuru-shi, Yamanashi 402-0025 (JP)**

(74) Representative: **Thomas, Philip John Duval**
**Eric Potter Clarkson,**
**Park View House,**
**58 The Ropewalk**
**Nottingham NG1 5DD (GB)**

(54) **GAS ABSORBING MATERIAL**

(57) Disclosed is a gas absorbent material having an excellent gas absorptive capacity, especially a gas absorbent material for use as an interior material for buildings, to absorb harmful gas in the room. The gas absorbent material according to the present invention comprises: a high-temperature carbonized charcoal which is carbonized at a temperature of about 800°C or above; a low-temperature carbonized charcoal which is carbonized at a temperature of about 500°C or below; and alginic acid or its salt or calcium oxide. A combination of a high-temperature carbonized charcoal, a low-temperature carbonized charcoal, and alginic acid or calcium oxide could have significantly improved the absorption activity of the charcoal.

FIG.13

EP 1 384 558 A1

**Description**

[BACKGROUND OF THE INVENTION]

Field of the Invention

The present invention relates to a gas absorbent material having an excellent gas absorptive capacity, especially a gas absorbent material for use as an interior material or internal finish material for buildings, to absorb harmful gas in the room. More particularly, the present invention relates to a gas absorbent composition which, when applied to a substrate, can impart a gas absorptive capacity to the substrate.

Background Art

A sick building syndrome or a sick house syndrome and chemical sensitivity have recently become a problem. These diseases would be caused by chemical substances released from construction materials in highly airtight buildings. Studies have been made on uptake of such chemical substances present in the room by charcoal through the utilization of absorptive capacity of the charcoal to inhibit these symptoms.

Specifically, come proposals have been made on a technique in which a wood charcoal or a bamboo charcoal are ground to a charcoal powder and the powder is mixed with various materials to prepare a building material (for example, Japanese Patent Laid-Open Nos. 150645/1995 and 49916/1994).

Further, Japanese Patent Laid-Open No. 226207/2000 discloses a production process of an activated wood charcoal having both a low-temperature carbonized part and a high-temperature carbonized part. This process comprises the steps of: heat-treating wood chips at 450 to 550°C to carbonize the wood chips (a low-temperature carbonization step); and subsequently heat-treating the carbonized wood chips at 800 to 900°C to further carbonize the wood chips (a high-temperature carbonization step). In this publication, however, there is no specific disclosure on any molded product using this activated wood charcoal. Further, this publication neither suggests nor discloses any useful binder for molding.

[SUMMARY OF THE INVENTION]

The present inventors have now found that a combination of a high-temperature carbonized charcoal, which has been carbonized at a temperature of about 800°C or above, a low-temperature carbonized charcoal, which has been carbonized at a temperature of about 500°C or below, and alginic acid or calcium oxide can significantly improve the absorption activity of the charcoal. The present invention has been made based on such finding.

Accordingly, an object of the present invention is to provide a gas absorbent material having an excellent gas absorptive capacity, especially a gas absorbent material for use as an interior material for buildings, to absorb harmful gas in the room.

Another object of the present invention is to provide a gas absorbent composition which, when applied to a substrate, can impart a gas absorptive capacity to the substrate.

The gas absorbent material according to the present invention comprises: a high-temperature carbonized charcoal which is carbonized at a temperature of about 800°C or above; a low-temperature carbonized charcoal which is carbonized at a temperature of about 500°C or below; and alginic acid or its salt or calcium oxide.

The gas absorbent composition according to the present invention comprises: a liquid medium; and, dispersed in said liquid medium, a high-temperature carbonized charcoal, which is carbonized at a temperature of about 800°C or above, a low-temperature carbonized charcoal, which is carbonized at a temperature of about 500°C or below, and alginic acid or its salt or calcium oxide.

[BRIEF DESCRIPTION OF THE DRAWINGS]

Fig. 1 is a perspective view of a specific embodiment of a charcoal board material according to the present invention;
Fig. 2 is a cross-sectional view taken on line A-A of Fig. 1;
Fig. 3 is a diagram illustrating the step of molding a board material according to the present invention;
Fig. 4 is a graph showing the results of a flame retardance test for test piece A in Example 1;
Fig. 5 is a graph showing the results of a flame retardance test for test piece B in Example 1;
Fig. 6 is a graph showing the results of a flame retardance test for test piece C in Example 1;
Fig. 7 is a graph showing a change in formaldehyde concentration with a gas absorbent material in Example 4;

Fig. 8 is a graph showing a change in benzene concentration with a gas absorbent material in Example 4;
Fig. 9 is a graph showing a change in toluene concentration with a gas absorbent material in Example 4;
Fig. 10 is a graph showing a change in ammonia concentration with a gas absorbent material in Example 4;
Fig. 11 is a graph showing a change in benzene concentration with a gas absorbent material in Example 5;
Fig. 12 is a graph showing a change in toluene concentration with a gas absorbent material in Example 5;

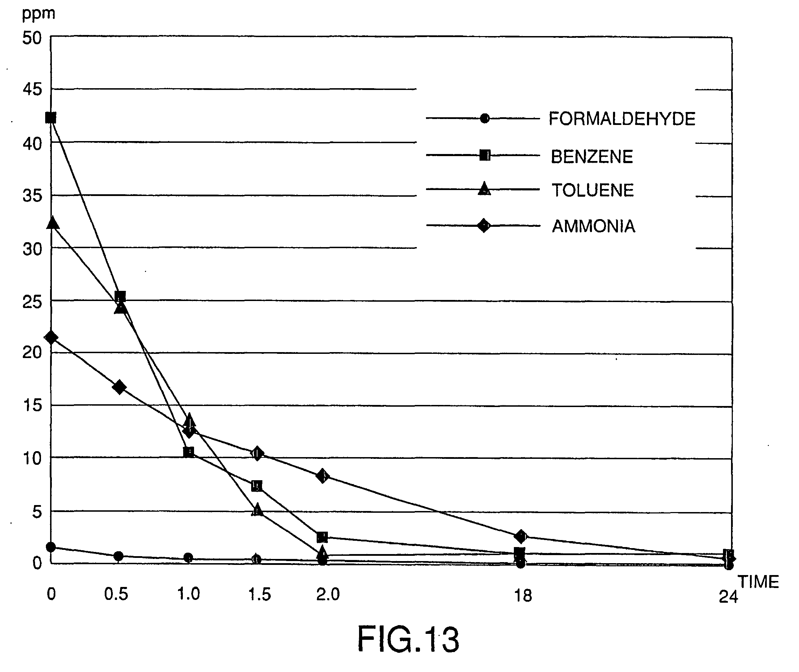

Fig. 13 is a graph showing a change in various gas concentrations with a gas absorbent material in Example 6; and
Fig. 14 is a graph showing a change in various gas concentrations with a gas absorbent material in Example 7.

[DETAILED DESCRIPTION OF THE INVENTION]

High-temperature carbonized charcoal and low-temperature carbonized charcoal

In the present invention, the high-temperature carbonized charcoal refers to a charcoal produced by carbonization at a temperature of about 800°C or above. In a preferred embodiment of the present invention, the high-temperature carbonized charcoal refers to a charcoal produced by carbonization at a temperature of about 800 to 1300°C, more preferably at a temperature of 900 to 1000°C. Activation, for example, by air or steam, may be carried out in a refining process involved in the production of the high-temperature carbonized charcoal.

Further, in the present invention, the low-temperature carbonized charcoal refers to a charcoal produced by carbonization at a temperature of about 550°C or below. In a preferred embodiment of the present invention, the low-temperature carbonized charcoal refers to a charcoal produced by carbonization at a temperature of about 300 to 550°C, more preferably at a temperature of 450 to 500°C.

Wood usable as a raw material for charcoal is not particularly limited and includes conifers such as cryptomerias, Japanese cypresses (hinoki), pines, and Japanese larches, bamboos and, in addition, building waste materials.

The high-temperature carbonized charcoal and the low-temperature carbonized charcoal are different from each other in absorptive capacity. Specifically, the high-temperature carbonized charcoal has high absorptive properties for formaldehyde, benzene, toluene, xylene, ethylbenzene, chlorobenzene and the like. On the other hand, the low-temperature carbonized charcoal has high absorptive properties for ammonia, amine and the like. A mixture of the high-temperature carbonized charcoal with the low-temperature carbonized charcoal has a good absorptive capacity for various materials.

The mixing ratio of the high-temperature carbonized charcoal to the low-temperature carbonized charcoal may be properly determined by taking into consideration the type of gas to be captured by the gas absorptive material according to the present invention. However, the mixing ratio of the high-temperature carbonized charcoal to the low-temperature carbonized charcoal on a weight basis is preferably 30 : 70 to 60 : 40, more preferably 40 : 60 to 50 : 50.

Preferably, the high-temperature carbonized charcoal and the low-temperature carbonized charcoal are ground to a powder which is then used for contemplated applications. The particle diameter may be properly determined. The particle diameter, however, is preferably about 0.3 to 9.5 mm, more preferably about 0.6 to 1.18 mm.

Since the high-temperature carbonized charcoal has an electrical conductivity of not more than 10 $\Omega \cdot$cm in terms of volume resistivity, the absorptive material according to the present invention can also advantageously possess antistatic effect and electromagnetic radiation shielding effect. The low-temperature carbonized charcoal generally has a volume resistivity of about $10^9$ to $10^{12}$ $\Omega \cdot$cm.

Alginic acid and calcium oxide

In the present invention, alginic acid or its salt, for example, sodium, potassium, or calcium salt, binds charcoal particles to one another and further has the effect of improving the gas absorptive capacity of the charcoal. It appears that these alginic acids alone, as compared with the charcoal, have no or, if any, low gas absorptive activity. Therefore, it is surprising that the coexistence of the charcoal and the alginic acids can significantly improve the gas absorptive activity of the mixture of the high-temperature carbonized charcoal with the low-temperature carbonized charcoal.

In the present invention, the alginic acid or its salt refers to purified alginic acid or its salt and, in addition, materials composed mainly of alginic acid, for example, carageenan and chondrus.

Further, in the gas absorptive material according to the present invention, the amount of alginic acid or its salt added may be properly determined from the viewpoints of a function as a binder and an improvement in gas absorptive activity. The lower limit of the amount of alginic acid or its salt added, however, is preferably about 5% by weight, more preferably about 10% by weight. On the other hand, the upper limit of the amount of alginic acid or its salt added is preferably about 25% by weight, more preferably about 15% by weight.

According to another embodiment of the present invention, the gas absorptive material of the present invention comprises calcium oxide in addition to the high-temperature carbonized charcoal and the low-temperature carbonized charcoal. This calcium oxide, as with alginic acid, functions to improve the gas absorptive capacity of the high-temperature carbonized charcoal and the low-temperature carbonized charcoal. Further, by virtue of the presence of calcium oxide, the gas absorptive material according to the present invention can advantageously improve its fire resisting performance. Specifically, shell baked calcium, produced by baking shell, and quick lime may be utilized as calcium oxide.

Further, in the gas absorptive material according to the present invention, the amount of calcium oxide added may be properly determined from the viewpoint of improving the gas absorptive activity. The lower limit of the amount of calcium oxide added is preferably about 5% by weight, and the upper limit of the amount of calcium oxide added is preferably about 15% by weight, more preferably about 7% by weight.

Furthermore, according to an embodiment of the present invention, the gas absorptive material according to the present invention may include both alginic acid and calcium oxide. The addition of a combination of alginic acid with calcium oxide can further improve the gas absorptive activity of the high-temperature carbonized charcoal and the low-temperature carbonized charcoal.

The gas absorptive material according to the present invention may include a binder with the proviso that the above alginic acid is included. Binders usable herein include diatomaceous earth, cement, polymeric binders such as isocyanate resin emulsions, and starch pastes. For example, normal portland cement, moderate-heat portland cement, high early strenghth portland cement, blast furnace cement, and silica cement may be utilized as the cement. The utilization of diatomaceous earth or cement is advantageous in that the fire resisting performance of the gas absorptive material can be improved. Further, diatomaceous earth or cement is preferably utilized in combination with a polymeric binder as a binder. The amount of the binder added may be properly determined. When the amount of the binder added is excessively large, however, the gas absorptive activity of the gas absorbent material is sometimes deteriorated. Therefore, preferably, the amount of the binder added is carefully determined. The amount of the binder added in the gas absorbent material according to the present invention is preferably about 10 to 40% by weight.

Molded product and production process thereof

The gas absorbent material according to the present invention is generally used in a molded form. Specifically, the gas absorbent material is molded into a board form which is then utilized as indoor construction materials, for example, wall materials or ceiling materials. Alternatively, the gas absorbent material according to the present invention may be molded into any form which is then placed in the room to absorb harmful components in the room, that is, may be used as the so-called "deodorant."

In the production of a molded product, a filler or a reinforcement is preferably used from the viewpoint of enhancing the strength. Preferred examples of fillers or reinforcements usable herein include fibrous materials, such as Manila hemps and wood pulps, wire gauzes, and lattice or honeycomb structures.

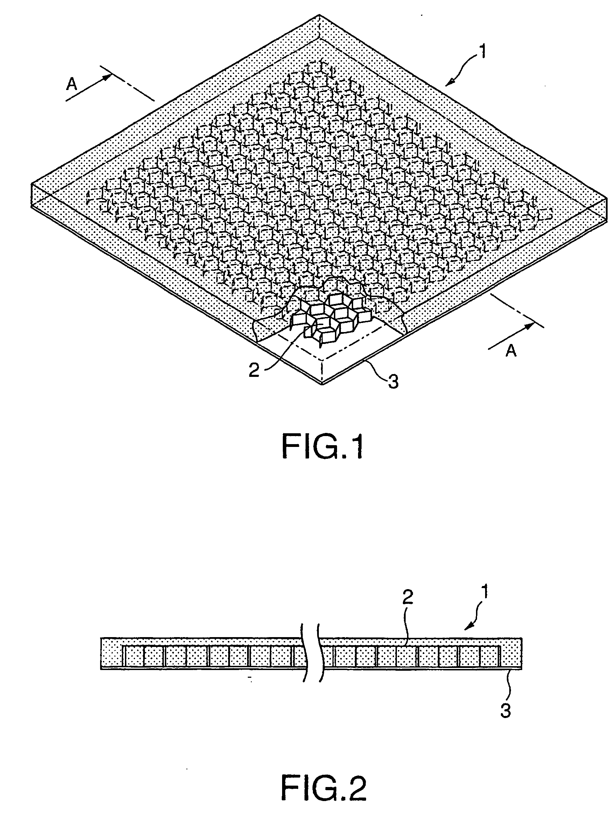

Board materials can easily be prepared by pouring a mixture of a high-temperature carbonized charcoal, a low-temperature carbonized charcoal, alginic acid or calcium oxide and optionally a binder and other ingredients into a mold and molding the mixture. According to a preferred embodiment of the present invention, the board material is preferably in a form shown in Figs. 1 and 2. The board material shown in Figs. 1 and 2 includes a substrate 3 and a reinforcement 2 having a honeycomb structure joined to the substrate 3. The periphery of the substrate 3 is surrounded by a frame (not shown), and the above mixture is poured into a space defined by the substrate and the frame, followed by rolling and molding of the upper surface to such an extent that the upper end of the reinforcement 2 is somewhat concealed by the mixture, whereby the preparation of the board material is completed.

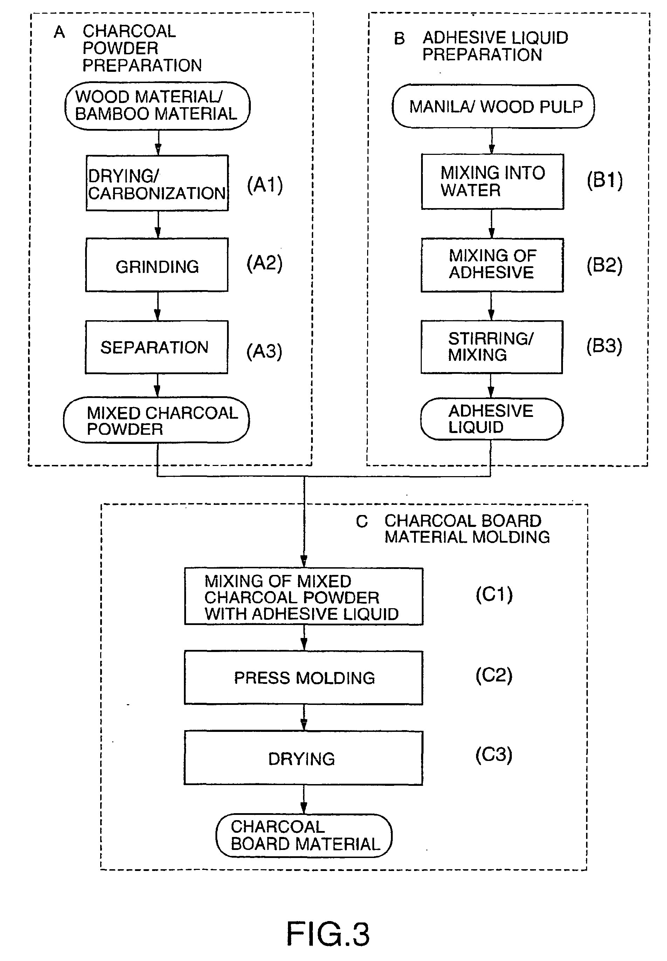

A general production process of a board material as a gas absorbent material according to the present invention will be described with reference to Fig. 3. Gas absorbent materials in a form other than the board material may also be produced according to this production process by varying the form of the mold. The production process comprises three steps, that is, charcoal powder preparation step A, adhesive liquid preparation step B, and board material molding step C.

In the charcoal powder preparation step as step A, wood as a raw material, for example, thinned logs of cryptomerias, Japanese cypresses (hinoki) and the like, building waste materials, or bamboos, is cut into chips having a suitable size, and the chips are dried and are then placed in an oven for carbonization to prepare a high-temperature carbonized charcoal and a low-temperature carbonized charcoal (step A1). Next, the high-temperature carbonized charcoal and the low-temperature carbonized charcoal are ground by means of a roller or the like (step A2). The powder thus obtained is sorted by a filter with a predetermined mesh (step A3), and undersize particles are then used as mixed charcoal powder.

In the binder liquid preparation step B, a fibrous material such as a Manila hemp or a wood pulp is first cut into chips having a suitable size, and the chips are mixed with water to disintegrate the fibrous material to prepare an aqueous solution containing a disintegrated fibrous material (step B1). Next, a suitable amount of adhesives, that is, alginic acid and other binder, are added to the aqueous solution containing the disintegrated fibrous material (step B2), followed by thorough stirring for mixing (step B3). Alginic acid is preferably added as a solution prepared by mixing and dissolving alginic acid in a suitable amount of water.

In the board material molding step C, the mixed charcoal powder prepared in the charcoal powder preparation step as step A and the adhesive liquid prepared in the adhesive liquid preparation step B are first mixed together in a predetermined ratio, and the mixture is thoroughly kneaded to prepare a raw material for a board material (step C1). Next, the kneaded raw material for the board material is poured into a frame, followed by press molding to a given thickness (step C2). Next, the whole assembly including the frame is placed in a drying oven for drying at a temperature of room temperature to 60°C or below for about 3 to 5 hr (step C3). After withdrawing from the drying oven, the frame is removed to take out a completed charcoal board material.

According to a preferred embodiment of the present invention, a decorative paper may be applied to the surface of the gas absorptive material in a board form to improve the appearance. The decorative paper is not limited so far as it has such a certain level of air permeability that does not sacrifice the function of the gas absorbent material according to the present invention. Further, in a preferred embodiment of the present invention, a photocatalyst or the like may be adhered to the decorative paper for use in the preparation of a multifunctional board material which additionally has photocatalytic decomposition activity.

Gas absorbent composition

According to another aspect of the present invention, there is provided a gas absorbent composition comprising: a liquid medium; and, dispersed in said liquid medium, a high-temperature carbonized charcoal, a low-temperature carbonized charcoal, and alginic acid or its salt or calcium oxide.

A gas absorptive capacity can be efficiently imparted to a substrate by spraying this composition on the substrate. For example, this composition may be brought to a spray form which is then sprayed on a place or an article to which a gas absorptive capacity is to be imparted, whereby a gas absorptive capacity can be simply imparted the place or the article. Specifically, a packaging material, such as a corrugated board, having the function of deodorizing the contents thereof can be easily prepared by spraying the composition on the interior of a packaging material.

Liquid media usable herein include water and alcohols.

The particle diameter of the high-temperature carbonized charcoal and the low-temperature carbonized charcoal in the composition according to the present invention may be properly determined by taking into consideration, for example, dispersion stability of the particles. The lower limit of the particle diameter, however, is preferably about 10 μm, more preferably about 70 μm, and the upper limit of the particle diameter is preferably about 1,000 μm, more preferably about 600 μm.

The proportion of the components constituting the gas absorbent composition according to the present invention may be properly determined. Preferably, however, the gas absorbent composition comprises about 40 to 60% by weight of the high-temperature carbonized charcoal and the low-temperature carbonized charcoal, about 10 to 30% by weight of alginic acid or calcium oxide, and about 25 to 35% by weight of the liquid medium.

[EXAMPLES]

Preparation of high-temperature carbonized charcoal and low-temperature carbonized charcoal

A high-temperature carbonized charcoal and a low-temperature carbonized charcoal used in the following examples were prepared as follows. A concrete kiln having an internal volume of 16 m$^3$, which has a flame port in its front, has an exhaust port in its back lower part, and has been covered in its interior with refractory bricks, was provided. Wood was placed in the, kiln, and initial firing was carried out from the flame port. After the elapse of about 24 hr from the initial firing, decomposition and carbonization began, and a temperature of 300 to 400°C continued for additional about 48 hr. Thereafter, the temperature rose to 400 to 550°C. This temperature rise was judged to indicate the completion of carbonization and the initiation of a refining process. After the elapse of 5 to 10 hr from the initiation of the refining process, the kiln was fully hermetically sealed and was cooled. The charcoal thus obtained was used as low-temperature carbonized charcoal. In the refining process, activation by air and activation by steam were carried out, the carbonization temperature was 900 to 1100°C. Then, this temperature was kept for 3 hr. The charcoal thus obtained was used as a high-temperature carbonized charcoal. The activation by air was carried out by forcibly feeding air into the oven at an air flow rate of 10 to 20 m$^3$/min until the temperature reached about 900 to 1000°C. On the other hand, the activation by steam was carried out by forcibly feeding steam at a rate of 0.5 to 2 liters/min simultaneously with the force feeding of the air.

Example 1: Bending strength test (1)

A mixed charcoal powder (1,000 g) composed of the high-temperature carbonized charcoal and the low-temperature carbonized charcoal was mixed with 100 g of a Manila hemp to prepare a mixture. A adhesive (220 g) (composed of 60 g on a solid basis of vinyl acetate, 80 g of a starch paste, and 80 g of sodium alginate) and 200 g of shell baked calcium were added thereto.

Next, the mixture thus obtained was poured into a frame, followed by press molding to a given thickness. The whole assembly including the frame was then placed in a drying oven and was dried at room temperature or a temperature of 60°C or below for about 3 to 5 hr. The whole assembly was taken out of the drying oven. The frame was then removed to prepare a board having a size of 300 x 400 x 15 mm as test piece A. Separately, the above mixture was divided into two portions, and one of the two portions was poured into the frame. A gauze material was then spread on the mixture, and the remaining portion of the mixture was poured into the frame on its gauze material. Subsequently, the above procedure for the preparation of test piece A was repeated to prepare a charcoal board material with a gauze material laid therein as test piece B. Test piece C was prepared in the same manner as used in the preparation of test piece B, except that a hemp string was incorporated instead of the use of the gauze material. In this case, 14 pieces (5 x 9) of hemp string were arranged in a lattice form over the whole charcoal board. Test pieces A, B, and C were left to stand in a test chamber under conditions of temperature 20°C and relative humidity 60% for one week or longer to homogenize the temperature and water content of the test pieces.

The bending strength test was carried out according to JIS A 6901 "8.5 Bending test." In this case, the supporting span of the test piece was 350 mm, and a bending load was applied from the backside of the test piece. The results were as shown in Table 1. The bending strength of each of the test pieces was determined according to the following equation.

$$\text{Bending strength (N/mm}^2) = 3\,PL/2\,bt^2$$

where

P: Breaking load at bending, N;
L: span, mm;
b: width of broken face of test piece, mm; and
t: thickness of broken face of test piece, mm.

The results were as shown in the following table.

Table 1

| Test piece | Sample No. | Breaking load at bending, N | Bending strength, N/mm$^2$ |
|---|---|---|---|
| A | 1 | 475 | 4.95 |
| | 2 | 481 | 4.34 |
| | 3 | 514 | 4.31 |
| | Average | 490 | 4.53 |
| B | 1 | 590 | 4.96 |
| | 2 | 507 | 4.19 |
| | 3 | 511 | 4.53 |
| | Average | 536 | 4.56 |
| C | 1 | 561 | 4.05 |
| | 2 | 455 | 3.12 |
| | 3 | 514 | 3.90 |
| | Average | 510 | 3.69 |

Example 2: Bending strength test (2)

The charcoal boards used as test pieces in Example 1 were provided, and a 0.3 mm-thick cardboard was applied to both sides of the charcoal boards to prepare test pieces A', B', and C'. Test pieces A', B', and C' were tested in the same manner as in Example 1. The results were as shown in Table 2.

Table 2

| Test piece | Sample No. | Breaking load at bending, N | Bending strength, N/mm$^2$ |
|---|---|---|---|
| A' | 1 | 1138 | 7.48 |
| | 2 | 1240 | 8.16 |
| | 3 | 1228 | 8.10 |
| | Average | 1202 | 7.91 |
| B' | 1 | 1432 | 10.86 |
| | 2 | 1240 | 9.60 |
| | 3 | 1458 | 9.70 |
| | Average | 1377 | 10.05 |
| C' | 1 | 1196 | 7.98 |
| | 2 | 1358 | 8.31 |
| | 3 | 1148 | 7.84 |
| | Average | 1234 | 8.04 |

As shown in the above table, the average breaking load at bending for test piece A' was 1202 N which was approximately twice the reference value, 650 N of a gypsum board (thickness 15 mm).

Example 3: Fire resisting performance test

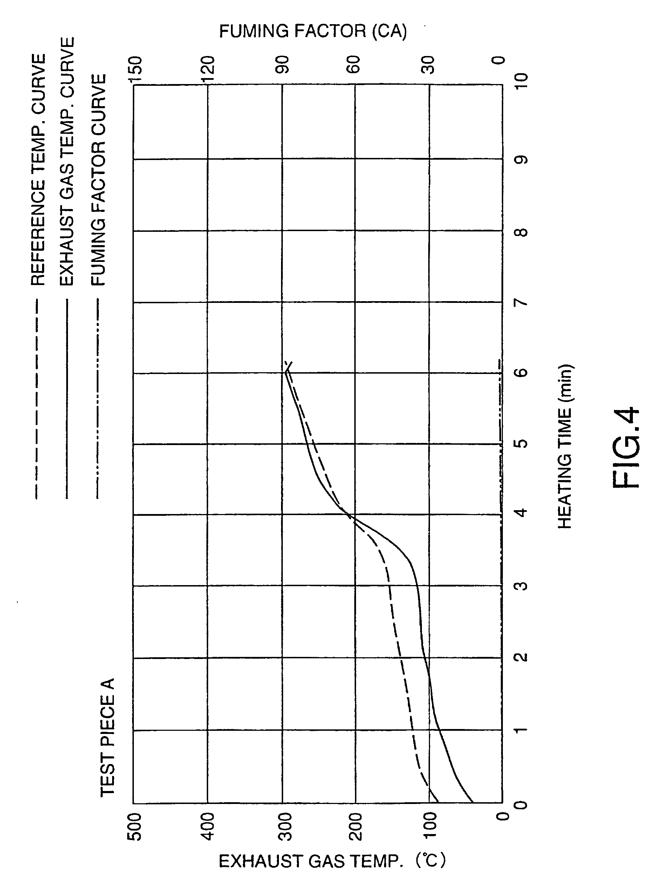

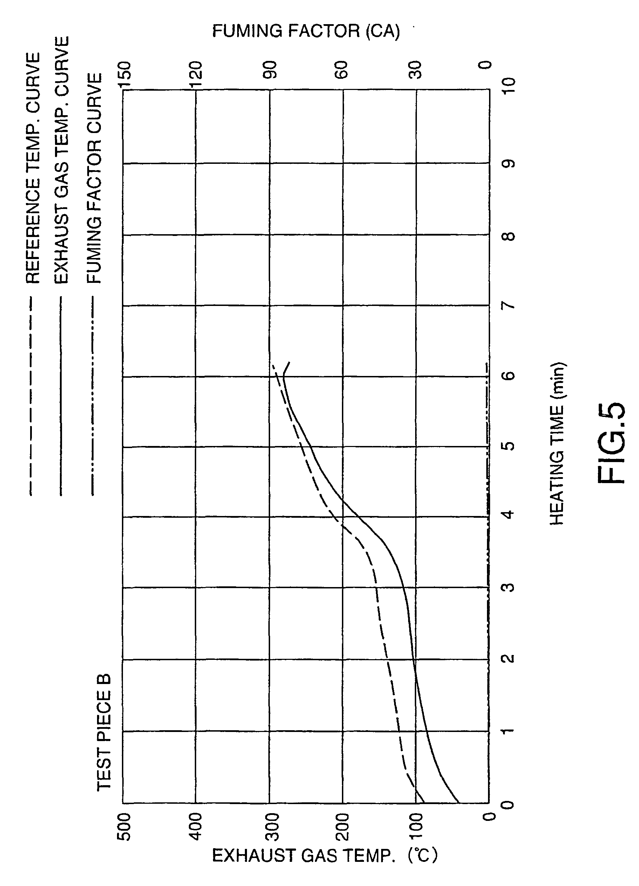

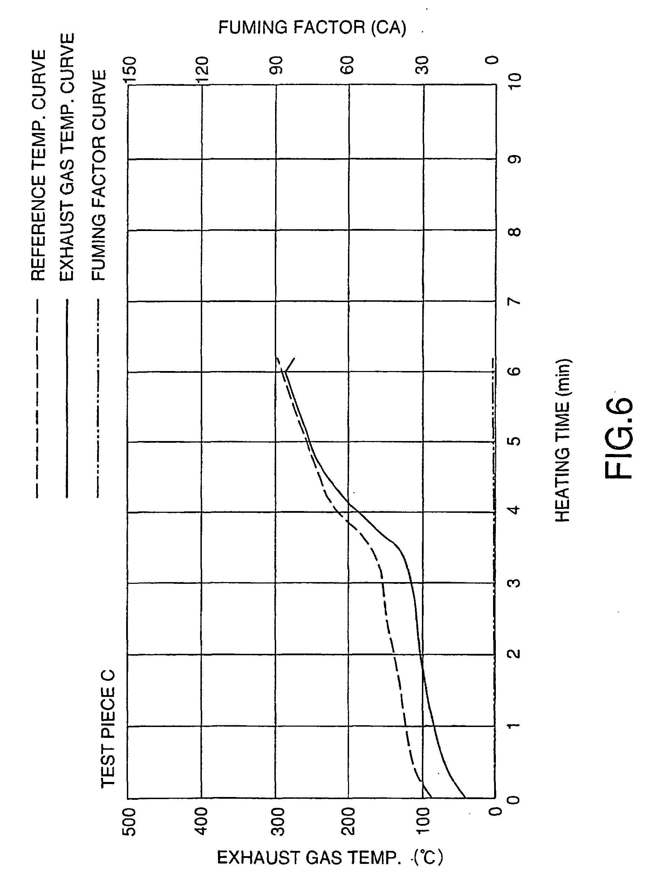

The charcoal boards prepared in Example 1 were subjected to a grade 3 incombustibility surface test specified in JIS A 1321 (Testing method for incombustibility of internal finish material and procedure of buildings). This test was carried out under conditions of 1.50 kw (a main heat source), 0.35 liters/min (L.P.G.) (a sub-heat source), and 6 min (heating time).
The results were as shown in Table 3 and Figs. 4 to 6. The results show that the fuming factors (CA) of the test pieces were 0.9, 0.6, and 0.5, respectively, indicating that the charcoal boards passed the grade 3 incombustibility surface test specified in JIS A 1321.

Table 3

| Test piece | A | B | C |
|---|---|---|---|
| Time elapsed until exceeding reference curve | 4 min 00 sec | None | None |
| Temp. time area, °C·min | 11.1 | 0 | 0 |
| Fuming factor, CA | 0.9 | 0.6 | 0.5 |
| Lingering flame time, sec | None | None | None |
| Distortion injurious to fire protection | None | None | None |
| Melting over whole thickness | None | None | None |
| Cracking | None | None | None |

Example 4: Gas adsorption test (1)

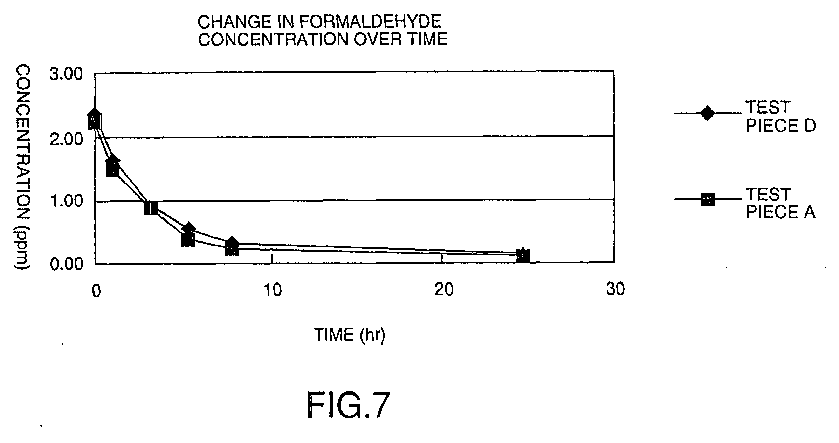

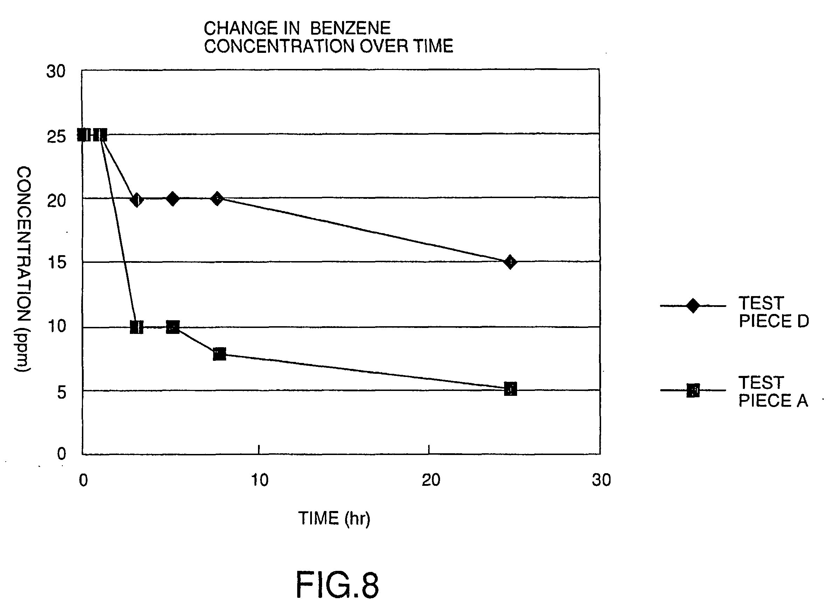

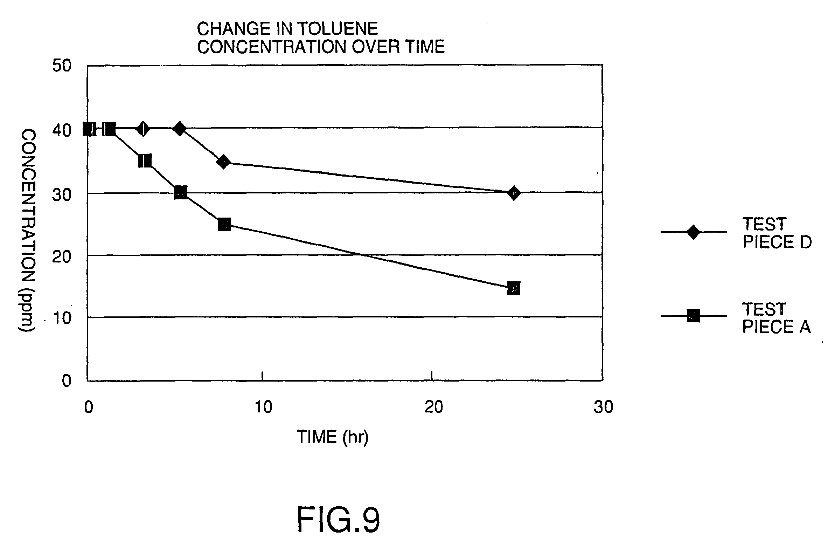

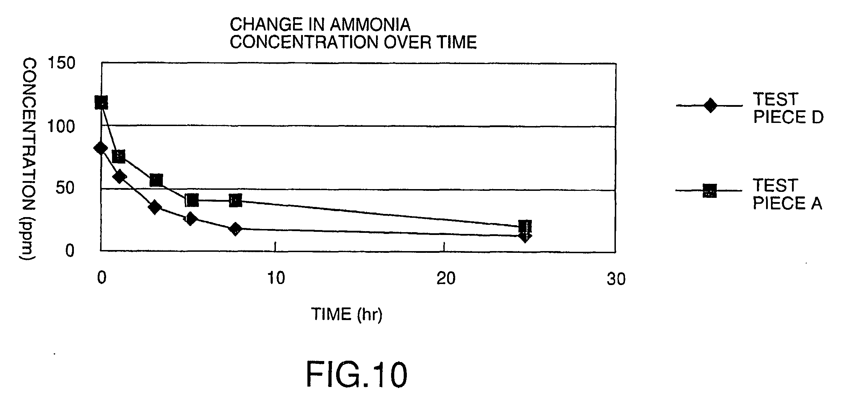

Test piece A prepared in Example 1 and test piece D prepared in the same manner as in test piece A except for the absence of calcium oxide were provided. Each of the test pieces was placed in a hermetically sealed 30-liter test box. Gas was then injected into this box to a suitable concentration, and the change in gas concentration over time was measured. Formaldehyde, benzene, toluene, and ammonia were used as the gas.
The results were as shown in Figs. 7 to 10. The results show that both test piece A and test piece D have the effect of adsorbing all the test gases. Further, it is apparent that, for benzene and toluene, test piece A has much higher concentration reduction than test piece D, indicating that adsorption effect attained by calcium oxide is significant.

Example 5: Gas adsorption capacity test (2)

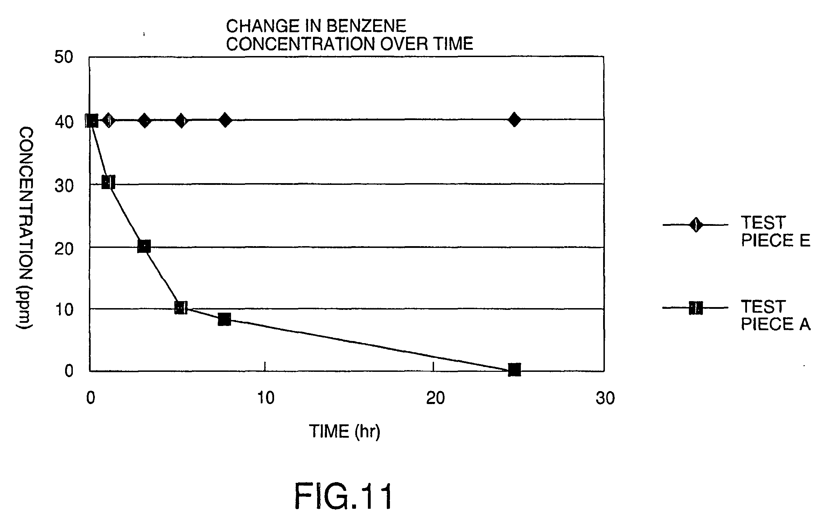

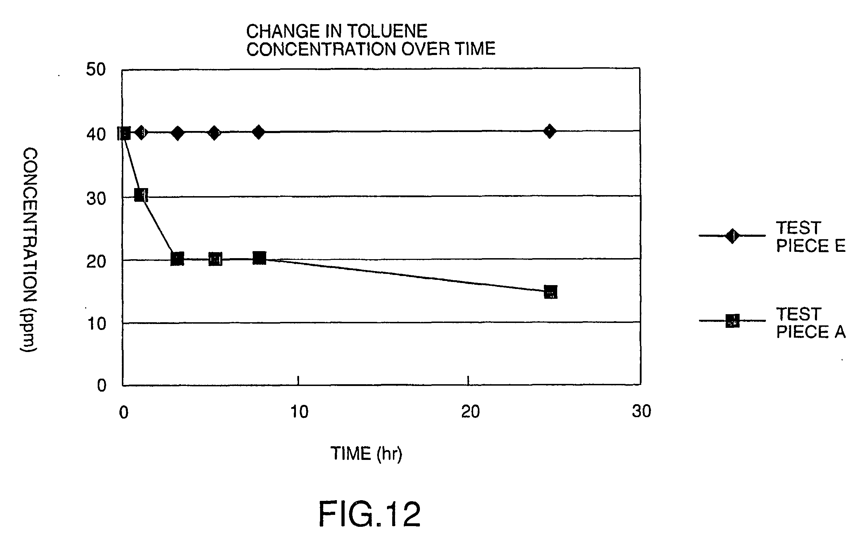

Test piece A and test piece E prepared in the same manner as in test piece A except for the use of vinyl acetate only, in the pressure-sensitive adhesive, without the use of the starch paste and sodium alginate were provided. These test pieces were tested for gas adsorption capacity in the same manner as in Example 4. As a result, for formaldehyde and ammonia, test piece E had gas adsorption capacity substantially equal to test piece A. However, for benzene and toluene, test piece E was inferior in gas adsorption capacity to test piece A. The change in benzene gas concentration over time and the change in toluene gas concentration over time were as shown in Figs. 11 and 12, respectively.

Example 6: Gas adsorption capacity test (3)

(1) Preparation of test piece

A high-temperature carbonized charcoal (250 g), 250 g of a low-temperature carbonized charcoal, and 100 g of a Manila hemp were added to a mixture composed of a suitable amount of water, 250 g of normal portland cement, and 250 g of diatomaceous earth. Further, 50 g of a starch paste and 50 g of sodium alginate were added thereto. This mixture was thoroughly mixed to a clay form which was then used to prepare a test piece having a size of 600 mm in length x 900 mm in width x 15 mm in thickness in the same manner as in Example 1.

(2) Testing method and measuring method

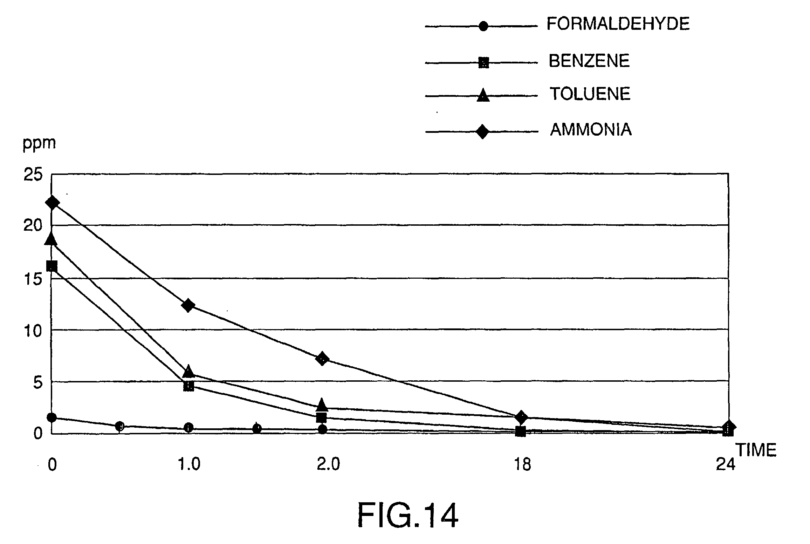

The above test piece was applied to the inner wall of a hermetically sealed test chamber having a volume of 8 $m^3$ to form a charcoal board wall having a total area of 8 $m^2$. The test chamber was provided with a gas introduction port and two measuring sample collecting ports, an upper measuring sample collecting port and a lower measuring sample collecting port. Formaldehyde, benzene, toluene, or ammonia was injected into the test chamber. These gases are liquid at room temperature. Therefore, after a predetermined amount of gas was previously introduced into a 10-liter bag, 10 liters of air was introduced into the bag to volatilize the gas. The concentration of gas in the bag is about several thousands of ppm. Next, the gas in the bag was injected into the test chamber through the gas introduction port. The concentration of gas in the test chamber was brought to about 3 ppm for formaldehyde and was brought to about 30 ppm for benzene, toluene, and ammonia. The air in the bag was sampled from the two upper and lower measuring sample collecting ports at predetermined time intervals after the gas injection to measure gas concentration with a gas concentration measuring device (a Kitagawa gas detecting tube).
The change in gas concentration was as shown in Table 5 and Fig. 14. The gas adsorption rate at that time was as shown in Table 6.

Table 5

|  | Gas concentration, ppm | | | |
|---|---|---|---|---|
| Time | Formaldehyde | Benzene | Toluene | Ammonia |
| 0 | 1.52 | 42.50 | 32.67 | 21.50 |
| 0.5 | 0.73 | 25.50 | 24.50 | 16.92 |
| 1.0 | 0.53 | 10.33 | 13.33 | 12.33 |
| 1.5 | 0.42 | 7.17 | 5.00 | 10.25 |
| 2.0 | 0.34 | 3.50 | 1.00 | 8.17 |
| 18.0 | 0.12 | 1.00 | 1.00 | 2.27 |
| 24.0 | 0.10 | 1.00 | 1.00 | 0.77 |

Table 6

|  | Adsorption rate, % | | | |
|---|---|---|---|---|
| Time | Formaldehyde | Benzene | Toluene | Ammonia |
| 0 | 0.00 | 0.00 | 0.00 | 0.00 |

Table 6 (continued)

| Time | Formaldehyde | Benzene | Toluene | Ammonia |
|------|--------------|---------|---------|---------|
| | | | Adsorption rate, % | |
| 0.5 | 19.80 | 40.00 | 25.00 | 20.84 |
| 1.0 | 63.20 | 75.67 | 59.00 | 41.67 |
| 1.5 | 71.80 | 83.00 | 84.67 | 51.17 |
| 2.0 | 76.80 | 92.00 | 97.00 | 60.67 |
| 18.0 | 91.60 | 98.00 | 97.00 | 89.00 |
| 24.0 | 93.40 | 98.00 | 97.00 | 99.00 |

Example 7: Gas adsorption capacity test (4)

(1) Preparation of test piece

A high-temperature carbonized charcoal (250 g), 250 g of a low-temperature carbonized charcoal, and 100 g of a Manila hemp were added to a mixture composed of 150 g of an emulsion, prepared by emulsifying Oshika Resin B-1605 (an isocyanate resin adhesive manufactured by OSHIKA CORPORATION) in water, 50 g of a starch paste and 50 g of sodium alginate. This mixture was thoroughly mixed to a clay form which was then used to prepare a board material having a size of 600 mm in length x 900 mm in width x 15 mm in thickness in the same manner as in Example 1.

(2) Testing method and measuring method

The testing method and the measuring method were the same as those in Example 6. The change in gas concentration was as shown in Table 7 and Fig. 15. The gas adsorption rate at that time was as shown in Table 8.

Table 7

| Time | Formaldehyde | Benzene | Toluene | Ammonia |
|------|--------------|---------|---------|---------|
| | | | Gas concentration, ppm | |
| 0 | 1.61 | 16.27 | 18.83 | 22.33 |
| 1.0 | 0.60 | 4.47 | 5.83 | 12.17 |
| 2.0 | 0.36 | 1.43 | 2.50 | 7.00 |
| 18.0 | 0.09 | 0.20 | 1.03 | 1.50 |
| 24.0 | 0.06 | 0.20 | 0.20 | 0.50 |

Table 8

| Time | Formaldehyde | Benzene | Toluene | Ammonia |
|------|--------------|---------|---------|---------|
| | | | Adsorption rate, % | |
| 0 | 0.00 | 0.00 | 0.00 | 0.00 |
| 1.0 | 62.67 | 72.33 | 69.33 | 46.00 |
| 2.0 | 77.67 | 91.00 | 86.67 | 68.67 |
| 18.0 | 94.67 | 99.00 | 94.67 | 93.33 |
| 24.0 | 95.67 | 99.00 | 99.00 | 97.67 |

**Claims**

1. A gas absorbent material comprising: a high-temperature carbonized charcoal which is carbonized at a temperature of about 800°C or above; a low-temperature carbonized charcoal which is carbonized at a temperature of about 500°C or below; and alginic acid or its salt or calcium oxide.

2. The gas absorbent material according to claim 1, which comprises both alginic acid or its salt and calcium oxide.

3. The gas absorbent material according to claim 1 or 2, wherein the mixing ratio of the high-temperature carbonized charcoal to the low-temperature carbonized charcoal is 30 : 70 to 60 : 40 on a weight basis.

4. The gas absorbent material according to any one of claims 1 to 3, wherein said high-temperature carbonized charcoal is carbonized at a temperature of 800 to 1300°C.

5. The gas absorbent material according to any one of claims 1 to 4, wherein said low-temperature carbonized charcoal is carbonized at a temperature of 300 to 550°C.

6. The gas absorbent material according to any one of claims 1 to 5, which is in a molded form.

7. The gas absorbent material according to claim 6, which is an indoor construction material.

8. A gas absorbent composition comprising: a liquid medium; and, dispersed in said liquid medium, a high-temperature carbonized charcoal, which is carbonized at a temperature of about 800°C or above, a low-temperature carbonized charcoal, which is carbonized at a temperature of about 500°C or below, and alginic acid or its salt or calcium oxide.

9. The gas absorbent composition according to claim 8, which comprises both alginic acid or its salt and calcium oxide.

10. The gas absorbent material according to claim 8 or 9, wherein the mixing ratio of the high-temperature carbonized charcoal to the low-temperature carbonized charcoal is 30 : 70 to 60 : 40 on a weight basis.

11. The gas absorbent material according to any one of claims 8 to 10, wherein said high-temperature carbonized charcoal is carbonized at a temperature of 800 to 1300°C.

12. The gas absorbent material according to any one of claims 8 to 11, wherein said low-temperature carbonized charcoal is carbonized at a temperature of 300 to 550°C.

13. A method for imparting a gas absorptive capacity to a substrate, said method comprising the step of spaying the gas absorbent composition according to any one of claims 8 to 12 on said substrate.

14. A substrate having a gas absorptive capacity which has been imparted by the method according to claim 13.

FIG.1

FIG.2

A CHARCOAL POWDER PREPARATION

```
┌──────────────────────┐
│ WOOD MATERIAL/       │
│ BAMBOO MATERIAL      │
└──────────────────────┘
           │
           ▼
┌──────────────────────┐
│ DRYING/              │  (A1)
│ CARBONIZATION        │
└──────────────────────┘
           │
           ▼
┌──────────────────────┐
│ GRINDING             │  (A2)
└──────────────────────┘
           │
           ▼
┌──────────────────────┐
│ SEPARATION           │  (A3)
└──────────────────────┘
           │
           ▼
┌──────────────────────┐
│ MIXED CHARCOAL       │
│ POWDER               │
└──────────────────────┘
```

B ADHESIVE LIQUID PREPARATION

```
┌──────────────────────┐
│ MANILA/ WOOD PULP    │
└──────────────────────┘
           │
           ▼
┌──────────────────────┐
│ MIXING INTO          │  (B1)
│ WATER                │
└──────────────────────┘
           │
           ▼
┌──────────────────────┐
│ MIXING OF            │  (B2)
│ ADHESIVE             │
└──────────────────────┘
           │
           ▼
┌──────────────────────┐
│ STIRRING/            │  (B3)
│ MIXING               │
└──────────────────────┘
           │
           ▼
┌──────────────────────┐
│ ADHESIVE             │
│ LIQUID               │
└──────────────────────┘
```

C CHARCOAL BOARD MATERIAL MOLDING

```
┌──────────────────────────────┐
│ MIXING OF MIXED              │  (C1)
│ CHARCOAL POWDER              │
│ WITH ADHESIVE LIQUID         │
└──────────────────────────────┘
           │
           ▼
┌──────────────────────────────┐
│ PRESS MOLDING                │  (C2)
└──────────────────────────────┘
           │
           ▼
┌──────────────────────────────┐
│ DRYING                       │  (C3)
└──────────────────────────────┘
           │
           ▼
┌──────────────────────────────┐
│ CHARCOAL                     │
│ BOARD MATERIAL               │
└──────────────────────────────┘
```

# FIG.3

FIG.4

FIG.5

FIG.6

TEST PIECE C

REFERENCE TEMP. CURVE

EXHAUST GAS TEMP. CURVE

FUMING FACTOR CURVE

FUMING FACTOR (CA)

EXHAUST GAS TEMP. (°C)

HEATING TIME (min)

CHANGE IN FORMALDEHYDE
CONCENTRATION OVER TIME

TEST PIECE D

TEST PIECE A

CONCENTRATION (ppm)

TIME (hr)

FIG.7

## CHANGE IN BENZENE CONCENTRATION OVER TIME

FIG.8

CHANGE IN TOLUENE
CONCENTRATION OVER TIME

TEST PIECE D

TEST PIECE A

FIG.9

CHANGE IN AMMONIA
CONCENTRATION OVER TIME

TEST
PIECE D

TEST
PIECE A

FIG.10

EP 1 384 558 A1

FIG.11

EP 1 384 558 A1

CHANGE IN TOLUENE
CONCENTRATION OVER TIME

TEST PIECE E

TEST PIECE A

FIG.12

EP 1 384 558 A1

FIG.13

EP 1 384 558 A1

FIG.14

## INTERNATIONAL SEARCH REPORT

International application No.

PCT/JP02/04366

### A. CLASSIFICATION OF SUBJECT MATTER
Int.Cl$^7$ B27N3/00, E04F13/14

According to International Patent Classification (IPC) or to both national classification and IPC

### B. FIELDS SEARCHED

Minimum documentation searched (classification system followed by classification symbols)
Int.Cl$^7$ B27N3/00, E04F13/14, C01B31/08

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2000-226207 A (Hinomaru Kabotekuno Kabushiki Kaisha), 15 August, 2000 (15.08.00), (Family: none) | 1-14 |
| Y | JP 5-186709 A (Osaka Gas Co., Ltd.), 27 July, 1993 (27.07.93), (Family: none) | 1-14 |
| Y | JP 7-67948 A (Matsushita Electric Industrial Co., Ltd.), 14 March, 1995 (14.03.95), (Family: none) | 1-14 |
| Y | JP 2001-2414 A (Yugen Kaisha Inoko Sangyo), 09 January, 2001 (09.01.01), (Family: none) | 1-14 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 June, 2002 (11.06.02) | 25 June, 2002 (25.06.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 384 558 A1**

<table>
<tr><td colspan="3">INTERNATIONAL SEARCH REPORT</td><td colspan="2">International application No.<br>PCT/JP02/04366</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 6-9215 A (Suzuki Kogyo Kabushiki Kaisha),<br>18 January, 1994 (18.01.94),<br>(Family: none) | 1-14 |
| A | JP 6-49916 A (Kabushiki Kaisha Diamond Kogyo),<br>22 February, 1994 (22.02.94),<br>(Family: none) | 1-14 |
| A | JP 7-150645 A (Kabushiki Kaisha Tosei Maruwa<br>Kogyo),<br>13 June, 1995 (13.06.95),<br>(Family: none) | 1-14 |

Form PCT/ISA/210 (continuation of second sheet) (July 1998)